# FASCICULE DE BREVET EUROPEEN

(11) **EP 0 618 593 B1**
(45) Date de publication et mention de la délivrance du brevet: **17.07.1996**
(21) Numéro de dépôt: 94400687.3
(22) Date de dépôt: 30.03.1994
(51) Int. Cl.: H01C 1/014

(54) **Dispositif de maintien de bandes résistives pour résistance de puissance**
Halterungsanordnung für Widerstandsbänder für Leistungswiderstände
Device for holding resistive ribbons for power resistors

(30) Priorité: 02.04.1993 FR 9303909
(43) Date de publication de la demande: 05.10.1994
(73) Titulaire: GEC ALSTHOM TRANSPORT SA, 75016 Paris (FR)
(72) Inventeur: Couderc, Olivier, F-65000 Tarbes (FR); Puel, Bernard, F-65310 Laloubere (FR); Teixido, Joseph, F-64140 Lons (FR)
(74) Mandataire: Fournier, Michel

(56) Documents cités:
- DE-A- 2 461 296
- US-A- 2 874 257
- US-A- 4 316 172
- US-A- 5 165 052

## Description

La présente invention concerne un dispositif de maintien de bandes résistives pour résistance de puissance.

Certaines résistances de puissance utilisent comme partie résistive des rubans ou des bandes métalliques. C'est le cas en particulier des résistances de puissance employées en traction ferroviaire comme rhéostat de freinage. Pour limiter les échauffements et les usures des freins mécaniques, une partie importante de l'énergie cinétique de l'engin est convertie en énergie électrique dissipée sous forme thermique dans les rhéostats de puissance. Ces résistances doivent supporter les sévères conditions de service rencontrées en traction ferroviaire.

Ces rhéostats se présentent sous forme de caissons que l'on associe de façon à obtenir la résistance totale désirée. Chaque caisson possède un ruban résistif réalisé généralement à partir d'un alliage de nickel et de chrome. Le ruban résistif est constitué de bandes pliées en zigzag et soudées bout à bout. Le montage du ruban dans le caisson doit permettre un échange thermique maximal entre le ruban et le flux d'air de refroidissement, assurer le maintien mécanique du ruban soumis aux effets de la dilatation thermique et interdire les courts-circuits entre parties de ruban en vis-à-vis. Pour assurer ce montage, on utilise des peignes, le ruban étant disposé entre les dents des peignes qui autorisent les mouvements du ruban dûs à la dilatation thermique et interdisent les courts-circuits. Ainsi, un caisson de rhéostat peut comprendre quatre peignes disposés parallèlement à un niveau inférieur et quatre peignes disposés parallèlement à un niveau supérieur, les dents des peignes de niveau inférieur faisant face aux dents des peignes de niveau supérieur. Le ruban résistif est disposé transversalement par rapport aux huit peignes parallèles entre eux.

Cette technique de maintien du ruban résistif constitue un montage complexe qui nécessite de nombreux éléments. En effet, un peigne complet est composé d'une suite de peignes élémentaires montés en enfilade et disposés dans un support métallique constituant l'un des éléments du caisson. Le montage se fait de la manière suivante. Les peignes élémentaires, percés dans le sens de leur longueur, sont enfilés sur une tige filetée à ses deux extrémités. Des pièces intermédiaires percées sont également enfilées sur la tige, chaque pièce intermédiaire s'intercalant entre deux peignes élémentaires. Les pièces intermédiaires sont en matériau isolant et ont une forme assez élaborée. Elles sont percées d'un trou axial pour le passage de la tige filetée. Elles sont usinées pour leur donner à chaque extrémité une partie rentrante dans le peigne élémentaire adjacent avec épaulement de retenue. Leur rôle est d'assurer la continuité d'une isolation électrique renforcée entre le ruban résistif et le support de peigne tout en permettant les mouvements relatifs des peignes élémentaires dûs aux dilatations du ruban résistif. Sans leur présence, on ne pourrait éviter les lignes de fuite électrique entre le ruban résistif et le support de peigne. Elles doivent également supporter les contraintes thermiques. On les réalise donc en céramique comme les peignes.

Lors du fonctionnement du rhéostat, il se produit un échauffement important et répétitif qui induit des déformations dans le ruban et dans la structure du caisson. Il est apparu, dans certaines conditions d'utilisation, que les pièces intermédiaires supportent mal les chocs thermiques générés lors du fonctionnement. Ces chocs thermiques ajoutés aux vibrations finissent par faire éclater ces pièces rendues fragiles par leur usinage.

L'usinage de ces pièces ainsi que les contraintes auxquelles elles ont soumises ont conduit à un choix rigoureux du type de céramique utilisée pour les concevoir. Ceci procure un autre inconvénient lié aux difficultés d'approvisonnement selon les fournisseurs.

Enfin, l'ensemble d'un peigne monté est d'un coût trop élevé. Il se compose d'un support travaillé, de plusieurs peignes élémentaires percés, de pièces intermédiaires percées et usinées, d'une tige d'assemblage, de rondelles et d'écrous. Il doit constituer un montage flottant à cause des dilatations thermiques. Tout ceci cause un temps d'assemblage trop long.

Afin de remédier à ces inconvénients, la présente invention propose un nouveau dispositif de maintien des rubans résistifs comprenant un nombre réduit d'éléments constitutifs, pour lequel les peignes élémenaires ne sont pas percés, qui n'utilise pas de tige d'assemblage et surtout qui n'utilise pas de pièce intermédiaire. Ce nouveau dispositif a pu être mis en oeuvre en donnant au support une forme en glissière dans laquelle peuvent coulisser les peignes élémentaires.

L'invention a donc pour objet un dispositif de maintien de bandes résistives pour résistance de puissance se présentant sous la forme d'un ruban plié en zigzag, comprenant un support métallique recevant un peigne de maintien des bandes formé d'une succession de peignes élémentaires en matériau isolant montés flottants sur le support, des moyens d'isolation en matériau diélectrique étant prévus entre deux peignes élémentaires adjacents pour s'intercaler entre le ruban et le support, caractérisé en ce que le support et les peignes élémentaires possèdent des formes complémentaires pour constituer un système à glissière, deux peignes élémentaires adjacents ayant leurs extrémités en vis-à-vis présentant des formes conjugées pour constituer lesdits moyens d'isolation.

Le support peut avoir une section en forme de U à bords rabattus vers l'intérieur, les peignes élémentaires étant pourvus de rainures latérales dans lesquelles s'engagent lesdits bords rabattus.

Ceci présente l'avantage de fournir un système à glissière simple et efficace.

Le support métallique peut être avantageusement pourvu de plaques d'extrémité transversales. Ceci permet de les fixer facilement à la structure mécanique du rhéostat.

L'une des plaques d'extrémité peut constituer une butée en translation pour les peignes élémentaires. Ceci facilite le montage des peignes élémentaires sur le support.

Ces plaques d'extrémité peuvent posséder au moins un trou de fixation. Ceci permet le montage des dispositifs de maintien des bandes résistives sur la structure du rhéostat par vissage ou par l'utilisation de goupilles.

Les formes conjugées des extrémités de peignes élémentaires peuvent consister en un chevauchement de l'une des extrémités d'un peigne élémentaire sur l'extrémité du peigne élémentaire adjacent.

L'invention sera mieux comprise et d'autres avantages et particularités apparaîtront à la lecture de la description qui va suivre, donnée à titre non limitatif, accompagnée des dessins annexés parmi lesquels :
- la figure 1 est une vue en perspective d'un peigne élémentaire du dispositif selon l'invention,
- la figure 2 est une vue en perspective d'un dispositif selon l'invention,
- la figure 3 est une vue du dispositif selon l'une de ses extrémités.

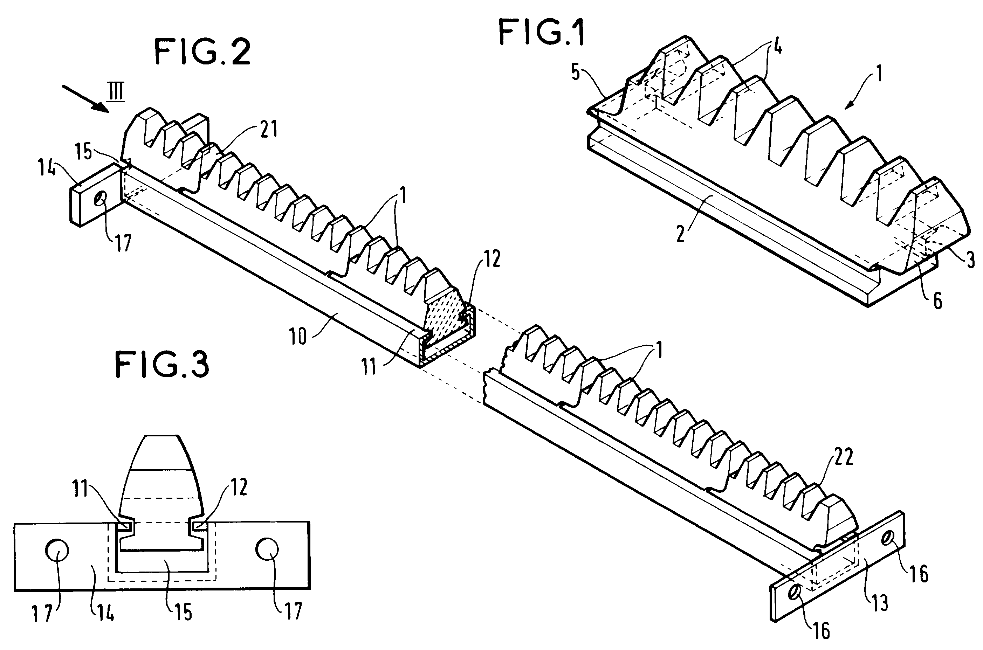

La figure 1 montre un peigne élémentaire 1 en céramique isolante, par exemple en stéatite ou en cordiérite. Il est pourvu en partie basse de deux rainures latérales 2 et 3 effectuées sur toute sa longueur. Sa partie haute est pourvue de dents 4 entre lesquelles on disposera le ruban résistif. On remarque que l'une des extrémités du peigne, l'extrémité 5, ne possède que sa partie basse tandis que l'autre extrémité, l'extrémité 6, ne possède que sa partie haute.

La figure 2 montre un dispositif selon l'invention comlet. Il comprend un support métallique 10 qui est un profil en acier inoxydable de section en forme de U possédant des bords 11, 12 rabattus vers l'intérieur. Le support métallique 10 est pourvu de plaques d'extrémité 13, 14 disposées transversalement. Ces plaques, également en acier inoxydable, sont soudées sur le support 10. La plaque 13 ferme l'ouverture que présente le support à cette extrémité. La plaque 14 par contre possède une découpe 15 permettant de laisser libre l'ouverture que présente le support à cette extrémité (voir la figure 3).

Les plaques 13 et 14 permettent la fixation du support 10 sur la structure mécanique du rhéostat. La plaque 13 comporte deux trous taraudés 16 permettant sa fixation par vissage sur la structure du rhéostat. La plaque 14 comporte deux trous 17 permettant une liaison avec un certain jeu par rapport à la structure du rhéostat grâce à un axe goupillé. Ce jeu permet au support 10 de se dilater sous l'effet des contraintes thermiques sans déformer la structure du rhéostat et sans se déformer lui-même.

Le montage des peignes élémentaires sur le support se fait rapidement et facilement en faisant glisser les peignes élémentaires dans le support à partir de son extrémité ouverte, les rebords rabattus 11, 12 du support pénétrant dans les rainures 2 et 3 des peignes. La plaque d'extrémité 13 sert de butée pour les peignes élémentaires.

Le dispositif comporte des peignes 1 identiques entre eux et des peignes d'extrémité 21 et 22. Les peignes 1 sont mis bout à bout de façon que l'extrémité 6 d'un peigne chevauche l'extrémité 5 du peigne adjacent. Les peignes d'extrémité de support 21 et 22 sont différents des peignes 1. En effet, l'extrémité du peigne 22 adjacente à la plaque 13 et l'extrémité du peigne 21 adjacente à la plaque 14 n'ont pas à être conjugées avec des extrémités de peignes adjacents. Par contre, leurs autres extrémités ont des formes permettant de réaliser un chevauchement avec les peignes 1 adjacents.

Les longueurs des peignes élémentaires sont prévues pour que, quelle que soit la température de fonctionnement du rhéostat, il y ait toujours chevauchement de deux peignes adjacents. La protection diélectrique contre les lignes de fuite électriques entre ruban résistif et support de peigne est donc toujours assurée.

Les peignes élémentaires, y compris les peignes d'extrémité de support, peuvent être de longueurs différentes de manière à réaliser toutes les combinaisons possibles.

## Revendications

1. Dispositif de maintien de bandes résistives pour résistance de puissance se présentant sous la forme d'un ruban plié en zigzag, comprenant un support métalliques (10) recevant un peigne de maintien des bandes formé d'une succession de peignes élémentaires (1, 21, 22) en matériau isolant montés flottants sur le support (10), des moyens d'isolation en matériau diélectrique étant prévus entre deux peignes élémentaires (1, 21, 22) adjacents pour s'intercaler entre le ruban et le support (10), caractérisé en ce que le support (10) et les peignes élémentaires (1, 21, 22) possèdent des formes complémentaires pour constituer un système à glissière, deux peignes élémentaires adjacents ayant leurs extrémités en vis-à-vis (5, 6) présentant des formes conjugées pour constituer lesdits moyens d'isolation.

2. Dispositif selon la revendication 1, caractérisé en ce que le support (10) a une section en forme de U à bords (11, 12) rabattus vers l'intérieur, les peignes élémentaires (1, 21, 22) étant pourvus de rainures latérales (2, 3) dans lesquelles s'engagent lesdits bords rabattus (11, 12).

3. Dispositif selon l'une des revendications 1 ou 2, caractérisé en ce que le support métallique (10) est pourvu de plaques d'extrémité transversales (13, 14).

4. Dispositif selon la revendication 3, caractérisé en ce que l'une des plaques d'extrémité (13) constitue une butée en translation pour les peignes élémentaires.

5. Dispositif selon l'une des revendications 3 ou 4, caractérisé en ce que les plaques d'extrémité possèdent au moins un trou de fixation (16, 17).

6. Dispositif selon l'une quelconque des revendications 1 à 5, caractérisé en ce que les formes conjugées des extrémités de peignes élémentaires consistent en un chevauchement de l'une des extrémités (6) d'un peigne élémentaire sur l'extrémité (5) du peigne élémentaire adjacent.

## Patentansprüche

1. Vorrichtung zur Halterung von Widerstandsbändern in Form eines zickzackförmig gefalteten Bands für einen Leistungswiderstand, mit einem metallischen Träger (10), der einen aus einer Folge von Elementarkämmen (1, 21, 22) aus isolierendem Material bestehenden Haltekamm für die Bänder zu deren flottierender Montage trägt, und mit Isoliermitteln aus dielektrischem Material zwischen zwei benachbarten Elementarkämmen (1, 21, 22), die zwischen das Band und den Träger (10) eingefügt sind, dadurch gekennzeichnet, daß der Träger (10) und die Elementarkämme (1, 21, 22) komplementäre Formen aufweisen, um ein Gleitschienensystem zu bilden, wobei die einander gegenüberliegenden Enden (5, 6) zweier benachbarter Elementarkämme konjugierte Formen aufweisen, die Isoliermittel bilden.

2. Vorrichtung nach Anspruch 1, dadurch gekennzeichnet, daß der Träger (10) einen U-förmigen Querschnitt mit nach innen umgeschlagenen Rändern (11, 12) hat und daß die Elementarkämme (1, 21, 22) mit seitlichen Nuten (2, 3) versehen sind, in die diese umgeschlagenen Ränder (11, 12) sich einfügen.

3. Vorrichtung nach einem der Ansprüche 1 oder 2, dadurch gekennzeichnet, daß der metallische Träger (10) transversale Endplatten (13, 14) aufweist.

4. Vorrichtung nach Anspruch 3, dadurch gekennzeichnet, daß eine der Endplatten (13) einen Anschlag für die Elementarkämme in Translationsrichtung bildet.

5. Vorrichtung nach einem der Ansprüche 3 oder 4, dadurch gekennzeichnet, daß die Endplatten mindestens ein Befestigungsloch (16, 17) aufweisen.

6. Vorrichtung nach einem beliebigen der Ansprüche 1 bis 5, dadurch gekennzeichnet, daß die konjugierten Formen der Enden der Elementarkämme aus einer Überlappung eines der Enden (6) eines Elementarkamms bezüglich des Endes (5) des benachbarten Elementarkamms bestehen.

## Claims

1. Apparatus for holding resistive strips for a power resistor in the form of a zigzag folded ribbon, the apparatus comprising a metal support (10) receiving a comb for holding tapes, the comb being made up of a succession of unit combs (1, 21, 22) made of insulating material that are mounted floating on the support (10), insulating means of dielectric material between two adjacent unit combs (1, 21, 22) to be interposed between the ribbon and the support (10), the apparatus being characterized in that the support (10) and the unit combs (1, 21, 22) have complementary shapes so as to make up a slideway system, two adjacent unit combs having facing ends (5, 6) of complementary shapes so as to constitute said insulating means.

2. Apparatus according to claim 1, characterized in that the support (10) is a channel section member with folded-in edges (11, 12), the unit combs (1, 21, 22) being provided with lateral grooves (2, 3) in which said folded-in edges (11, 12) are engaged.

3. Apparatus according to claim 1 or 2, characterized in that the metal support (10) is provided with transverse end plates (13, 14).

4. Apparatus according to claim 3, characterized in that one of the end plates (13) constitutes an abutment for the unit combs in translation.

5. Apparatus according to claim 3 or 4, characterized in that each end plate includes at least one fixing hole (16, 17).

6. Apparatus according to any one of claims 1 to 5, characterized in that the complementary shapes of the ends of the unit combs consist in one of the ends (6) of one unit comb overlapping over the end (5) of the adjacent unit comb.
